# EUROPEAN PATENT APPLICATION

(11) **EP 4 525 422 A1**
(43) Date of publication of application: **19.03.2025**
(21) Application number: 23884635.6
(22) Date of filing: 23.10.2023
(51) Int. Cl.: H04M 1/72427, G06F 9/445

(54) **INSTANCE MANAGEMENT METHOD AND APPARATUS, AND ELECTRONIC DEVICE AND STORAGE MEDIUM**

(30) Priority: 31.10.2022 CN 202211354069
(71) Applicant: Huawei Technologies Co., Ltd., Shenzhen, Guangdong 518129 (CN)
(72) Inventor: CAO, Chunlei, Shenzhen, Guangdong 518129 (CN)
(74) Representative: Gill Jennings & Every LLP
(86) International application number: PCT/CN2023/125981
(87) International publication number: WO 2024/093703

(57) **Abstract**

This application provides an instance management method and apparatus, an electronic device, and a storage medium. The method includes: receiving an open command for a component running in a target application; creating a component instance corresponding to the component, and configuring a task identifier for the component instance based on startup configuration information of the target application; and configuring a corresponding first task view for the component instance based on the task identifier. According to the technical solutions provided in this application, a plurality of different component instances can be simultaneously operated, avoiding frequent startup and closure of component instances in the target application. This improves efficiency of switching between component instances, reduces waiting time during switching between instances for a user, and improves user experience.

## Description

This application claims priority to Chinese Patent Application No. 202211354069.5, filed with the China National Intellectual Property Administration on October 31, 2022 and entitled "INSTANCE MANAGEMENT METHOD AND APPARATUS, ELECTRONIC DEVICE, AND STORAGE MEDIUM", which is incorporated herein by reference in its entirety.

### TECHNICAL FIELD

This application relates to the field of device control technologies, and in particular, to an instance management method and apparatus, an electronic device, and a storage medium.

### BACKGROUND

A plurality of applications simultaneously run on an electronic device, task views corresponding to all applications are generated, and a user may switch between the plurality of task views, to implement an objective of simultaneously operating the plurality of applications.

Although a plurality of different applications can simultaneously run on the electronic device, when a plurality of instances are started in one application, a same task view is usually reused. If the user wants to switch between instances in one application, the user needs to close a task view of a current display instance before switching to a task view of another instance in the application. This reduces efficiency of switching between different instances in a same application, and complicates operations of the user and prolongs required waiting duration.

### SUMMARY

This application provides an instance management method and apparatus, an electronic device, and a computer-readable storage medium, to resolve problems of challenging operations and low switching efficiency resulting from frequent startup and closure of a plurality of component instances in the case of switching between the component instances in a same application.

According to a first aspect, an embodiment of this application provides an instance management method. The method includes: An electronic device receives an open command for a component of a target application; the electronic device creates a component instance corresponding to the component, and configures a task identifier for the component instance based on startup configuration information of the target application; and the electronic device configures a corresponding first task view for the component instance based on the task identifier.

When a user opens the component in the target application, the startup configuration information corresponding to the target application is read, the task identifier is allocated, by using the startup configuration information corresponding to the target application, to the component instance running in the target application, and the corresponding first task view is configured for the component instance based on the task identifier, to operate the component instance running in the target application. This implements an objective that a task view can be flexibly configured in a same target application. Different from a conventional instance management technology in which only one task view is allocated to a component of a target application, a corresponding task identifier may be allocated to each component instance based on the startup configuration information, so that a task view is configured based on the task identifier, that is, component instances with different task identifiers in the target application may correspond to different task views. This facilitates the user to quickly switch views when starting a plurality of component instances in one application, to simultaneously operate a plurality of different component instances, avoiding frequent startup and closure of component instances in the target application. This improves efficiency of switching between component instances, reduces waiting time during switching between instances for a user, and improves user experience.

In a possible implementation of the first aspect, the startup configuration information includes a startup mode identifier; and that the electronic device creates a component instance corresponding to the component, and configures a task identifier for the component instance based on startup configuration information of the target application includes: When the startup mode identifier is a first bit value, the electronic device configures the task identifier for the component instance based on the startup configuration information.

In a possible implementation of the first aspect, before the electronic device creates the component instance corresponding to the component, and configures the task identifier for the component instance based on the startup configuration information of the target application, the method further includes: The electronic device determines environment information obtained when the open command is received; and the electronic device queries, by using the startup configuration information, the startup mode identifier associated with the environment information.

In a possible implementation of the first aspect, the environment information includes one or a combination of at least two of the following: startup time, a startup location, and an application running on a device.

In a possible implementation of the first aspect, that the electronic device configures a corresponding first task view for the component instance based on the task identifier includes: When there is a first task view corresponding to the task identifier in a task view of the electronic device, the electronic device reuses the first task view corresponding to the task identifier; or when there is no first task view corresponding to the task identifier in a task view of the electronic device, the electronic device configures a first task view corresponding to the task identifier for the component instance.

In a possible implementation of the first aspect, after the receiving an open command for a component of a target application, the method further includes: When the startup mode identifier is a second bit value, the electronic device displays the component instance in a corresponding second task view in the target application, where the second task view is used to display all component instances in the target application; or when the startup mode identifier is a third bit value, the electronic device configures a corresponding third task view for the component instance, where each component instance opened by using the open command corresponds to one third task view.

In a possible implementation of the first aspect, after the electronic device configures the corresponding first task view for the component instance based on the task identifier, the method further includes: The electronic device destroys, in response to a close command for the component instance in the target application, the component instance running in the target application; and the electronic device retains the first task view corresponding to the component instance, and stores a first association relationship between the task identifier of the component instance and the first task view.

In a possible implementation of the first aspect, that the electronic device configures a corresponding first task view for the component instance based on the task identifier includes: The electronic device generates, by using a general component in the target application, the component instance and a component record corresponding to the component instance, where the component record includes the task identifier; and the electronic device configures the corresponding first task view for the component instance, and establishes a second association relationship between the first task view and the component record.

According to a second aspect, an embodiment of this application provides an instance management apparatus. The management apparatus includes:
an open command response unit, configured to receive an open command for a component running in a target application;
a task identifier configuration unit, configured to: create a component instance corresponding to the component, and configure a task identifier for the component instance based on startup configuration information of the target application; and
a task view configuration unit, configured to configure a corresponding first task view for the component instance based on the task identifier.

In a possible implementation of the second aspect, the startup configuration information includes a startup mode identifier; and the task identifier configuration unit includes:
a first configuration unit, configured to: when the startup mode identifier is a first bit value, configure the task identifier for the component instance based on the startup configuration information.

In a possible implementation of the second aspect, the management apparatus further includes:
an environment information determining unit, configured to determine environment information obtained when the open command is received; and
a mode determining unit, configured to query, by using the startup configuration information, the startup mode identifier associated with the environment information.

In a possible implementation of the second aspect, the environment information includes one or a combination of at least two of the following: startup time, a startup location, and an application running on a device.

In a possible implementation of the second aspect, the task view configuration unit includes:
a reuse configuration unit, configured to: when there is a first task view corresponding to the task identifier in a task view of the electronic device, reuse the first task view corresponding to the task identifier; and
a new configuration unit, configured to: when there is no first task view corresponding to the task identifier in a task view of the electronic device, configure, for the electronic device, a first task view corresponding to the task identifier for the component instance.

In a possible implementation of the second aspect, the management apparatus further includes:
a second configuration unit, configured to: when the startup mode identifier is a second bit value, display the component instance in a corresponding second task view in the target application, where the second task view is used to display all component instances in the target application; and/or
a third configuration unit, configured to: when the startup mode identifier is a third bit value, configure a corresponding third task view for the component instance, where each component instance opened by using the open command corresponds to one third task view.

In a possible implementation of the second aspect, the management apparatus further includes:
a component removal unit, configured to destroy, in response to a close command for the component instance in the target application, the component instance running in the target application; and
a view retention unit, configured to: retain the first task view corresponding to the component instance, and store a first association relationship between the task identifier of the component instance and the first task view.

In a possible implementation of the second aspect, the task view configuration unit includes:
a component record creation unit, configured to generate, by using a general component in the target application, the component instance and a component record corresponding to the component instance, where the component record includes the task identifier; and
an association creation unit, configured to: configure the corresponding first task view for the component instance, and establish a second association relationship between the first task view and the component record.

According to a third aspect, an embodiment of this application provides an electronic device. The electronic device includes: a memory, a processor, and a computer program stored in the memory and executable on the processor. When the processor executes the computer program, the instance management method according to any one of the implementations of the first aspect is implemented.

According to a fourth aspect, an embodiment of this application provides a computer-readable storage medium. The computer-readable storage medium stores a computer program, and when the computer program is executed by a processor, the instance management method according to any one of the implementations of the first aspect is implemented.

According to a fifth aspect, an embodiment of this application provides a computer program product. When the computer program product runs on an electronic device, the electronic device is enabled to perform the instance management method according to any one of the implementations of the first aspect is implemented.

According to a sixth aspect, an embodiment of this application provides a chip system, including a processor. The processor is coupled to a memory, and the processor executes a computer program stored in the memory, to implement the instance management method according to any one of the implementations of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a) to FIG. 3(c) are diagrams of viewing an existing electronic document;
FIG. 4 is a diagram of a structure of component instances in applications;
FIG. 5(a) and FIG. 5(b) are diagrams of a structure of task views of an application in a multi-instance mode;
FIG. 6 is an implementation flowchart of an instance management method according to an embodiment of this application;
FIG. 7 is an implementation diagram of displaying a plurality of component instances based on a scenario in an existing iOS^{®} system;
FIG. 8 is a specific implementation flowchart of S602 in an instance management method according to an embodiment of this application;
FIG. 9 is a specific implementation flowchart of S603 in an instance management method according to an embodiment of this application;
FIG. 10 is a diagram of managing a first task view according to an embodiment of this application;
FIG. 11(a) to FIG. 11(c) are diagrams of creating a first task view according to an embodiment of this application;
FIG. 12 is a diagram of managing a task view according to an embodiment of this application;
FIG. 13 is a diagram of destroying a component instance according to an embodiment of this application;
FIG. 14 is a block diagram of a structure of an example of an instance management apparatus according to an embodiment of this application; and
FIG. 15 is a block diagram of a structure of an electronic device according to an embodiment of this application.

### DESCRIPTION OF EMBODIMENTS

In the following description, for illustration instead of limitation, specific details such as a specific system structure and technology are provided, to thoroughly understand embodiments of this application. However, a person skilled in the art should understand that this application may also be implemented in other embodiments without these specific details. In other cases, detailed descriptions of a well-known system, apparatus, circuit, and method are omitted, so as not to obscure the description of this application with unnecessary detail.

It should be understood that the term "include" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims means any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or feature described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

An instance management method provided in an embodiment of this application may be applied to an electronic device like a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). In particular, the instance management method may be applied to a smartphone, or an electronic device with a multi-core processor that has a function of opening a plurality of component instances in an application. A specific type of the electronic device is not limited in this embodiment of this application.

For example, the electronic device may be a station (STATION, ST) in a WLAN, or may be a cellular phone, a cordless phone, a session initiation protocol (Session Initiation Protocol, SIP) phone, or a wireless local loop (Wireless Local Loop, WLL) station, a personal digital assistant (Personal Digital Assistant, PDA) device, a handheld device having a wireless communication function, a computing device or another processing device connected to a wireless modem, a computer, a laptop computer, a handheld communication device, a handheld computing device, and/or another device for performing communication in a wireless system, and a next-generation communication system, for example, a mobile terminal in a 5G network or a mobile terminal in a future evolved public land mobile network (Public Land Mobile Network, PLMN) network.

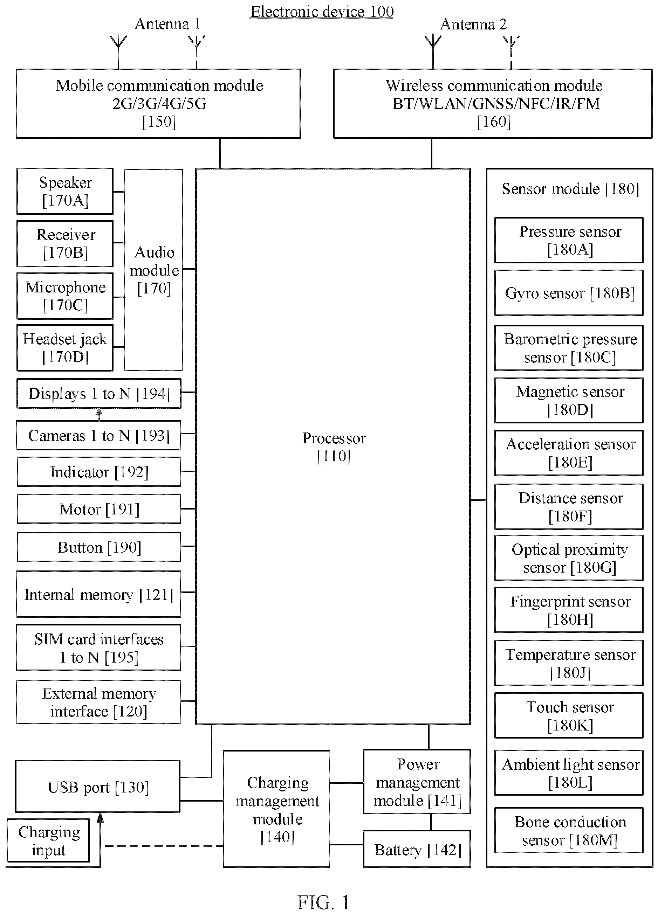

FIG. 1 is a diagram of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to reuse the instructions or the data, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured for audio communication, and analog signal sampling, quantization, and coding. In some embodiments, the audio module 170 may be coupled to the wireless communication module 160 through a PCM bus interface. In some embodiments, the audio module 170 may transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil in the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division a plurality of access (code division a plurality of access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a management microprocessor of an instance, and is connected to the display 194 and the application processor. The GPU is configured to: perform mathematical and geometric computation, and render an image. The processor 110 may include one or more GPUs, which execute program instructions to generate or change display information. The display 194 may specifically display a generated detection report, so that a user can view the detection report through the display 194.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1. The display 194 may include a touch panel and another input device.

The electronic device 100 may implement a photographing function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A. In particular, the speaker 170A may be configured to output prompt information.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. For example, the electronic device may obtain a weight of the user by using the pressure sensor 180A. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude using the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement an objective of automatically turning off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

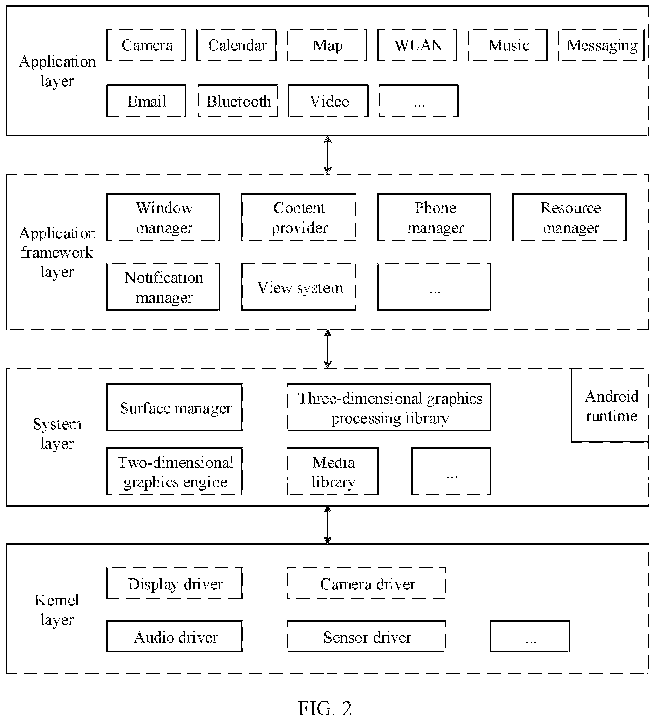

FIG. 2 is a block diagram of a software structure of an electronic device according to an embodiment of this application.

In a layered architecture, software is divided into several layers, and each layer has a clear role and task. The layers communicate with each other through a software interface. In some embodiments, the operating system of the electronic device is divided into four layers: an application layer, an application framework layer, a runtime system layer, and a kernel layer from top to bottom.

The application layer may include a series of application packages.

As shown in FIG. 2, the application package may include applications such as camera, calendar, map, WLAN, Bluetooth, music, video, messaging, and email.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that runs on a background, or may be a notification that appears on the screen in a form of a dialog window. For example, text information is displayed in the status bar, an announcement is given, the electronic device vibrates, or the indicator light blinks.

The runtime system layer includes a core library and virtual machine. The runtime system layer is responsible for scheduling and management of the Android system.

The kernel library includes two parts: a function to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system layer may include a plurality of functional modules, for example, a surface manager (surface manager), a media library (Media Libraries), a three-dimensional graphics processing library (for example, OpenGL ES), and a two-dimensional graphics engine (for example, SGL).

The surface manager is configured to manage a display subsystem and provide fusion of two-dimensional and three-dimensional graphics layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to start the camera application, then starts the camera driver by invoking the kernel layer, and captures a static image or a video through the camera 193.

Nowadays, with continuous development of device technologies, performance of the electronic device is increasingly high. A smartphone is used as an example. The smartphone originally provides only a relatively basic function, for example, telephone communication, SMS message interaction, and photographing. At present, while one game application can run in a foreground, another interaction application can further run in a background to receive interaction information sent by a peer end in real time, and favorite music is played by using the music application running in the background. In addition to simultaneously running a plurality of different applications, the smartphone may further run different component instances in a same application. In addition, with popularization of an applet and an application programming interface (Application Programming Interface API), types of component instances that can run in an application increase accordingly. How the electronic device can effectively manage a plurality of component instances running in an application becomes a key to affecting user experience.

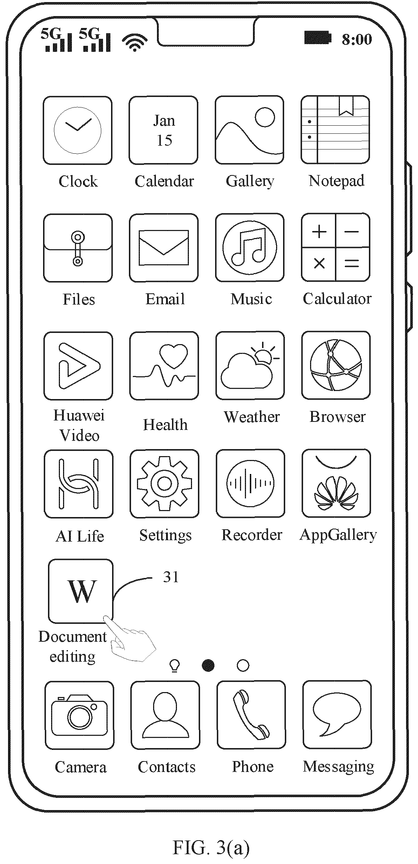

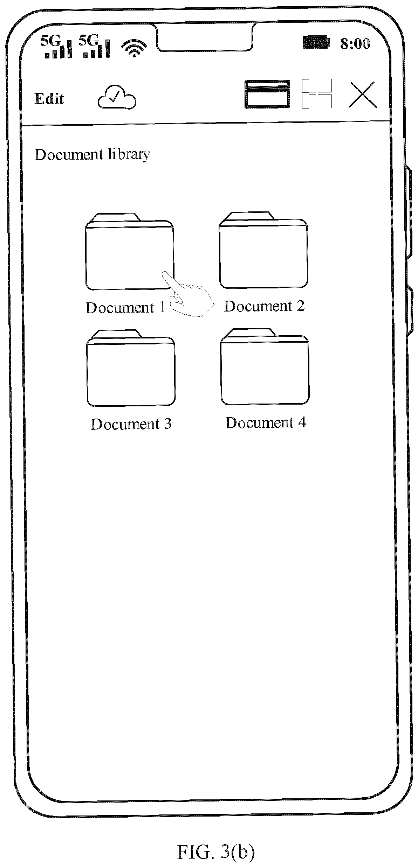

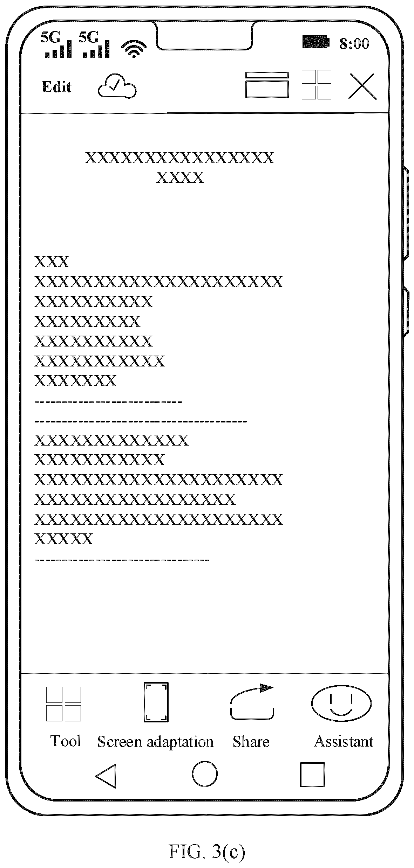

A document editing application is used as an example for description. The electronic device may store a plurality of different documents including a document 1 and a document 2. For example, FIG. 3(a) to FIG. 3(c) are diagrams of viewing an existing electronic document. Refer to FIG. 3(a). The electronic device is a smartphone in which a plurality of different applications are installed, for example, an application 31 that can edit a document. When the user wants to view a locally stored electronic document, the user may open the document editing application 31. In this case, the electronic device runs the document editing application, and generates a corresponding application operation interface, namely, a task view corresponding to the application, as shown in FIG. 3(b). In the task view, the user may select an electronic document to be opened. For example, the document 1 and the document 2 are stored. The electronic device opens a corresponding electronic document, that is, generates a component instance corresponding to the electronic document. The component instance may be displayed by using a visual view, to generate a task view as shown in FIG. 3(c).

In some implementations, a component instance of an application in the electronic device may be classified into the following two modes: a single-instance running mode and a multi-instance running mode. Details are as follows:

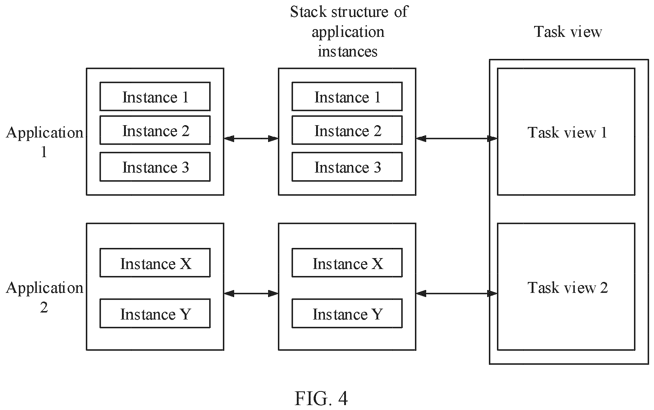

Manner 1: single-instance running mode. In this mode, each started component instance in the application is stored in a form of a task stack. For example, FIG. 4 is a diagram of a structure of component instances in applications. Refer to FIG. 4. The electronic device may simultaneously run different applications, for example, an application 1 and an application 2. Corresponding component instances may run in each application. For example, an instance 1, an instance 2, and an instance 3 run in the application 1, while an instance X and an instance Y run in the application 2. Each application corresponds to one task, that is, corresponds to one task view. In a task view managed in the application, a component instance in the application may be operated. In the single-instance running mode, an application may simultaneously start a plurality of component instances. The document editing application is still used as an example for description. The user may open the document 1 and then open the document 2 in the document editing application. In this case, a task view of the application displays content of the document 2. In other words, content in FIG. 3(c) is covered by content of the document 2, that is, a task view of the document 2 is above a task view of the document 1. This is consistent with a stack form. In this case, when the user wants to edit the content of the document 1, because the document 1 and the document 2 share a same task view, the document editing application needs to close the task view of the document 2 first, that is, a component instance of the document 2 is removed, and the task view of the document 1 that is covered by the task view of the document 2 is re-displayed. In this case, the user can edit the task content of the document 1. If the user opens a document 3 based on the document 2, the user needs to close a task view of the document 3 first, and then close the task view of the document 2. Because the documents 1 to 3 are stored in a stack form, the content of document 1 can be displayed only after all documents opened after the document 1 are closed. This is a first-in-last-out storage form. After completing editing the document 1, if the user wants to re-edit the content of the document 2, the user needs to re-select the document 2 to open it in the document editing application, so that the document editing application can cover the task view of the document 1 with the task view of the document 2. It can be seen that, in the single-instance running mode, when the application switches between component instances, component instances need to be frequently started and closed, complicating operations of the user, reducing operation efficiency of the user, and compromising user experience.

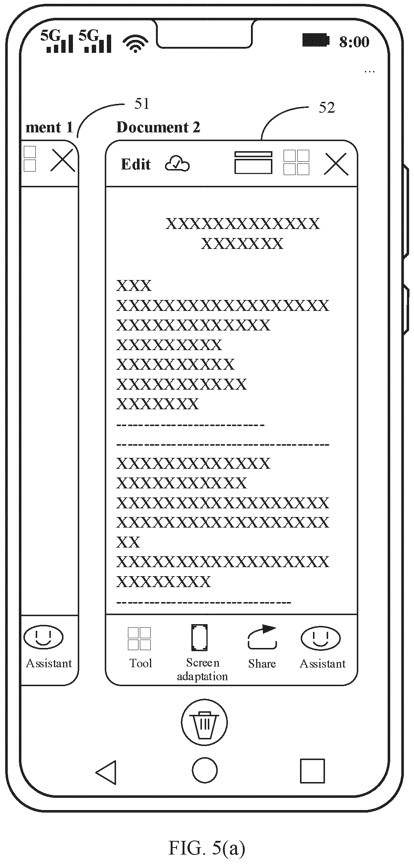

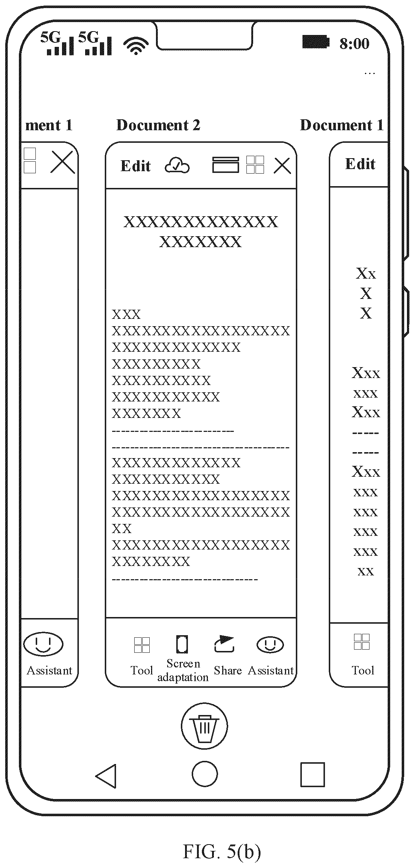

Manner 2: multi-instance running mode. In this mode, the user starts a component instance by using an application, and the application configures a corresponding task view for the component instance, to facilitate the user to switch between a plurality of task views. For example, FIG. 5(a) and FIG. 5(b) are diagrams of a structure of task views of an application in a multi-instance mode. Refer to FIG. 5(a). The file editing application starts two instances: the document 1 and the document 2, and the file editing application configures two task views: a view 51 and a view 52 for the two documents. The user may switch the task views of the two documents on a task management interface of the electronic device, to edit the different documents. In the multi-instance running mode, a corresponding task view can be configured each time the user opens a component instance. However, when the user opens a same component instance a plurality of times, for example, after opening the document 1, the user opens the document 2, and then reopens the document 1, a new task view is allocated to the document 1, as shown in FIG. 5(b). Therefore, in the multi-instance running mode, a task view is repeatedly configured for the same component instance, increasing unnecessary resource consumption and system overheads, and reducing resource utilization of the electronic device.

It can be seen that, for an instance management method for some applications, when the application runs in the single-instance manner, component instances need to be frequently started and closed when switching between the component instances, reducing operation efficiency of a user. If the application runs in the multi-instance manner, it is likely to open a plurality of task views for a same component instance, leading to a waste of resources. However, as a startup mode of an existing application is fixed, the existing startup mode cannot balance operation efficiency of the user and avoidance of unnecessary resource consumption.

Therefore, to resolve the problems in the foregoing technology, this application provides an instance management method. The instance management method is executed by an electronic device. The electronic device includes but is not limited to an electronic device that can run an application and perform operations on the application, for example, a smartphone, a tablet computer, a computer, or a laptop computer.

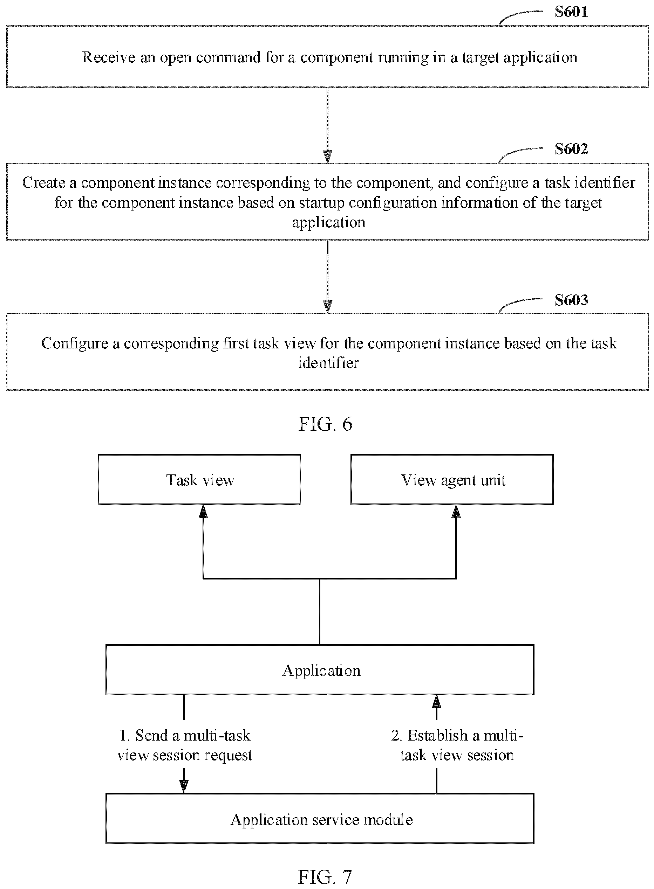

FIG. 6 is an implementation flowchart of an instance management method according to an embodiment of this application. Details are as follows:

S601: Receive an open command for a component running in a target application.

In this embodiment, a plurality of different applications are installed in an electronic device, and application icons corresponding to the applications may be displayed in a main view of the electronic device. A user may select, by a tapping or double-tapping operation, an application icon corresponding to an application (namely, a target application) to be started in the main view, to initiate a startup operation on the target application. For a specific startup process, refer to FIG. 3(a) to FIG. 3(c). Details are not described herein again. The electronic device may identify the application specified in the startup operation as the target application, obtain an application identifier of the target application, and generate a startup command carrying the application identifier, to run the target application in the electronic device. In a process of running the target application, the user may initiate an open command for a component corresponding to the target application to open the component, create a corresponding component instance by using a general component in the target application, to start a specific function in the target application, and configure a corresponding visual view, namely, a task view.

It should be noted that one target application may include a plurality of different components. In this case, the user may tap a control corresponding to any component to open the component, to create a corresponding component instance. Certainly, one target application may correspond to only one component. In this case, the user may initiate an open command for the target application, for example, tap an application icon of the target application in the main view or tap a task snapshot corresponding to the target application in a background. The electronic device responds to the open command, and creates a component instance of the component in the target application.

S602: Create a component instance corresponding to the component, and configure a task identifier for the component instance based on startup configuration information of the target application.

In this embodiment, each application may be associated with corresponding startup configuration information, and the startup configuration information is specifically used to limit a corresponding startup mode used when the application runs the component instance. The startup mode includes but is not limited to: a single-instance startup mode, a multi-instance startup mode, and a specified instance startup mode. It should be understood that an application (for example, the target application) that runs in the specified instance startup mode may dynamically allocate a task view based on an actual situation.

In a possible implementation, the application may correspond to a plurality of different components, and the different components may correspond to different startup configuration information. In this case, the electronic device may open a component associated with the command, and obtain startup configuration information corresponding to the component, so that a task view can be configured for the different components in different manners, to implement an objective of precisely managing component instances in the target application.

In a possible implementation, when a specific application is an application of a fixed instance, for example, a game application, the game application usually has only one game instance that can run, that is, no switching needs to be performed between a plurality of instances. In this case, startup configuration information of the application may be a default value or a default configuration, and may be specifically set based on an actual situation.

In this embodiment, the startup configuration information may be specifically configured before the application is launched. For example, the startup configuration information may be carried in a package of the application. A developer of the application may determine the startup configuration information corresponding to the application based on a common use scenario of the application, and add the startup configuration information to the package of the application when launching the application. When receiving the startup command for the target application, the electronic device may query, based on the application identifier carried in the startup command, a package corresponding to the application identifier from a memory, and read the startup configuration information of the target application from the package, to determine a startup mode corresponding to the target application.

To reduce development difficulty and a development workload of the application side and improve an application scope of flexible switching between component instances, the instance management method provided in this embodiment is completed by using an application service module in the electronic device side, that is, the component instances are not managed and maintained by using a component in the application. A difference between this application and a conventional component instance management technology lies in that the developer does not need to re-develop the startup mode of the component instance for the application.

The following uses a dynamic instance maintenance solution in an iOS^{®} system as an example. For example, FIG. 7 is an implementation diagram of displaying a plurality of component instances based on a scenario in an existing iOS^{®} system. Refer to FIG. 7. The iOS^{®} system provides an application service module that separately provides task views for a plurality of component instances in a same application. When the application needs to configure different task views for the plurality of instances, the application sends one multi-task view session request to the application service module. The application service module establishes a multi-task view session with the application. In this case, the application service module is specifically configured to maintain a lifecycle of the application, while a view agent unit in the application is configured to maintain a UI lifecycle of the task views of the component instances configured in the application. A corresponding task view is configured for each component instance in the application by using the view agent unit, to implement an objective of flexibly configuring the task views. However, it can be determined from FIG. 7 that, in this implementation, the task view of each component instance in the application is completed by the application side. The iOS^{®} system provides only one session, and lifecycle maintenance permission of the task view is granted to the application side. How different applications maintain the task view needs to be completed by the developer of the application side, resulting in an increase of development costs of the developer of the application. In addition, if a developer of a specific application does not develop a startup mode that dynamically adjusts an instance based on a scenario, the application does not support the foregoing startup mode, reducing an application scope of the startup mode.

To resolve defects of the conventional component instance management technology, the management method provided in this embodiment is applied to the electronic device side. The developer of the application needs to configure only the startup configuration information, and does not need to develop a corresponding view agent unit for the application. Management of the task view of the component instance is not completed by an application layer, but completed by an application service module in the electronic device (that is, implemented by a service side in the electronic device). This avoids independent development of a developer of each application, reduces a development workload, and improves an application scope of the startup mode that dynamically adjusts the instance based on a scenario.

In this embodiment, because the startup configuration information limits the startup mode of the component instance running in the target application, when a command for opening any component instance in the target application is received, before the component instance is opened in the target application, a startup mode of the component instance and a configuration manner of a task identifier associated with the startup mode are determined by using the startup configuration information, so that a task identifier corresponding to the component instance that needs to run is configured based on the startup mode of the component instance and the configuration manner of the task identifier. The task identifier is used to allocate the task view.

In a possible implementation, the foregoing configuration manner may be configuring a task identifier based on an instance name. Specifically, if instance names of component instances that need to run in the target application are different, different task identifiers are allocated. For example, if the target application is a document editing application, when the user opens component instances with different document names, the electronic device allocates different task identifiers to the component instances. For example, a task identifier 1 is allocated to a component instance corresponding to a document 1, and a task identifier 2 is allocated to a component instance corresponding to a document 2. If the user opens the document 2 a plurality of times, because the document names are the same, the same task identifier is not re-allocated, and the same task identifier 2 is reused.

In a possible implementation, the foregoing configuration manner may be configuring a task identifier based on a storage location of an instance. Specifically, when storage locations of component instances that need to run in the target application are different, different task identifiers are allocated. For example, two component instances with the same instance name (for example, the instance name is instance 1) are stored in the target application, one component instance is stored a disk C, and the other component instance is stored a disk D. Then, the two component instances are stored in different locations. In this case, different task identifiers are respectively configured for the different component instances.

In a possible implementation, the foregoing configuration manner may be configuring a task identifier based on a user account. Specifically, when component instances running in the target application belong to different user accounts, different task identifiers are allocated. For example, the target application is a social application. The user may separately log in to different user accounts in the social application, that is, a plurality of component instances run, and the different user accounts correspond to different dialog lists. To implement simultaneous operations of the plurality of accounts, corresponding task identifiers may be configured for the different user accounts, to configure different task views for the different user accounts.

It can be seen that there are various configuration manners of the task identifier for the component instance, and are associated with a type of the application and an instance type of the running component instance. Therefore, to improve accuracy of configuring the task identifier, the developer may record a configuration manner associated with the application in the startup configuration information, and the electronic device may configure the task identifier for the component instance based on the configuration manner defined in the startup configuration information.

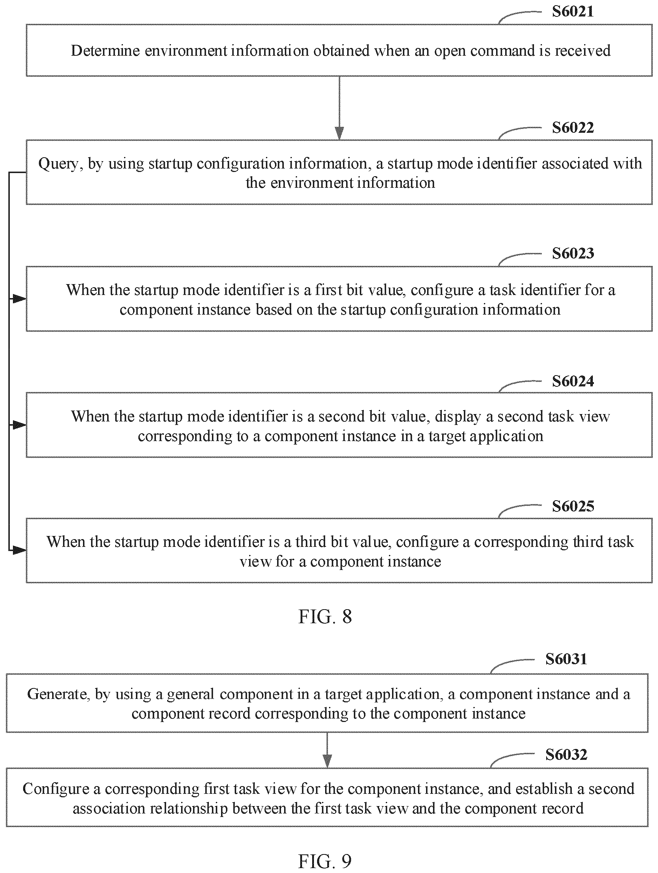

In another embodiment of this application, the startup configuration information includes a startup mode identifier, and the startup mode identifier is specifically used to determine a startup mode of the target application. Different bit values of the startup mode identifier correspond to different startup modes. FIG. 8 is a specific implementation flowchart of S602 in an instance management method according to an embodiment of this application. Refer to FIG. 8. S602 provided in this embodiment of this application specifically includes S6023 to S6025. Specific descriptions are as follows:

S6023: When the startup mode identifier is a first bit value, configure the task identifier for the component instance based on the startup configuration information.

In this embodiment, the startup mode of the application may be specifically classified into three types: a single-instance startup mode, a multi-instance startup mode, and a specified instance startup mode (namely, a startup mode of the task view is allocated based on the task identifier). Startup mode identifiers of different startup modes in the startup configuration information correspond to different bit values.

When the startup mode identifier is the first bit value, it indicates that the startup mode of the target application is a specified instance startup mode. In this case, a task identifier needs to be configured for the component instance based on a configuration manner in the startup configuration information, so that a corresponding task view may be subsequently allocated based on the task identifier.

S6024: When the startup mode identifier is a second bit value, display the component instance in a corresponding second task view in the target application, where the second task view is used to display all component instances in the target application.

In this embodiment, when the startup mode identifier is the second bit value, it indicates that the startup mode of the target application is a single-instance startup mode. Therefore, the component instance is displayed in the corresponding second task view in the target application. In the single-instance startup mode, the target application corresponds to only one task view, that is, all component instances running in the target application reuse a same task view, namely, the second task view. A plurality of component instances running in the single-instance startup mode may be stored in a form of a stack structure. That is, when a specific component instance in the stack may be operated, another component instance that is opened in the instance stack at time longer than the component instance to be operated may be first closed, and then the component instance is operated. During single-instance running, in addition to closing the another component instance opened later, an open command corresponding to the component instance may be reinitiated in an instance library, to re-add the component instance to the stack structure, so that the second task view of the target application is used to display the component instance.

S6025: When the startup mode identifier is a third bit value, the electronic device configures a corresponding third task view for the component instance, where each component instance opened by using the open command corresponds to one third task view.

In this embodiment, when the startup mode identifier is the third bit value, it indicates that the startup mode of the target application is the multi-instance startup mode, that is, a new task view, namely, the third task view, is configured for all component instances running in the target application. To be specific, each time the application opens one component instance, the third task view is configured for the component instance. When the user repeatedly opens a same component instance, a plurality of third task views whose quantity is the same as a quantity of opening times are generated, and the component instances can be operated in each third task view.

For example, the first bit value is 1, the second bit value is 2, and the third bit value is 3. When opening the component in the target application, the electronic device obtains the startup configuration information of the target application, extracts the startup mode identifier from the startup configuration information, and determines a bit value of the startup mode identifier. If the value of the startup mode identifier is 1, the operation of S6021 is performed; if the value of the startup mode identifier is 2, the operation of S6022 is performed; or if the value of the startup mode identifier is 3, the operation of S6023 is performed. The developer may set different bit values to set the startup mode of the component in the target application, so that the component instance runs in the electronic device in a startup mode that matches the target application.

In this embodiment of this application, the startup mode identifier is set to limit the startup manner of the component instance running in the target application, so that different startup manners can be used based on different startup mode identifiers. A difference between this embodiment of this application and the conventional component instance management technology lies in that the startup configuration information includes the startup mode identifier. The developer only needs to adjust the value, to change the startup mode of the target application, and the component of the application does not need to be re-developed. This reduces difficulty in switching between modes of the application, and further increases an application range of the specified instance startup mode.

Further, in another embodiment of this application, one target application may correspond to a plurality of different startup mode identifiers, and the different startup mode identifiers may be associated with corresponding use scenarios. The electronic device may determine, based on a current use scenario, a startup mode identifier corresponding to the current use scenario, and manage the component instance in the target application in a corresponding startup manner. Specifically, before S6023 and S6024, S6021 and S6022 may be further included. Specific descriptions are as follows:

S6021: Determine environment information obtained when the open command is received.

In this embodiment, the electronic device may collect, based on a type of environment information to be collected in the startup configuration information, the environment information corresponding to a moment at which the open command is received. For example, if the startup configuration information specifies that different time corresponds to different startup mode identifiers, the type of the environment information to be collected is time type information, and the electronic device may collect startup time as the environment information. For another example, the startup configuration information specifies that different locations correspond to different startup mode identifiers, and the type of environment information to be collected is location type information, and the electronic device may obtain a corresponding startup location by using a built-in positioning module, and use the collected startup location as the foregoing environment information.

In a possible implementation, when the startup configuration information includes only one startup mode identifier, that is, a same startup mode is used in all use scenarios. In this case, the electronic device may not perform the operations of S6021 and S6022, but perform an operation of any one of S6023 to S6025 based on a bit value of the startup mode identifier.

S6022: Query, by using the startup configuration information, the startup mode identifier associated with the environment information.

In this embodiment, the startup configuration information includes the startup mode identifier, and a usage scenario range associated with the startup mode identifier. After determining the environment information corresponding to the moment at which the open command is received, the electronic device may match the environment information with each usage scenario range, and determine a startup mode identifier associated with a usage scenario range that matches the environment information, to determine a startup mode to be used by the target application this time. This implements an objective of using different startup modes in different scenarios.

In a possible implementation, the environment information includes one or a combination of at least two of the following: startup time, a startup location, and an application running on a device.

For example, the environment information includes the startup time. A specific application uses the specified instance startup mode in daytime (7:00 to 18:00) and uses the single instance startup mode at night (18:00 to 7:00). In this case, the electronic device may obtain startup time corresponding to the moment at which the open command is received, for example, 14:00. In this case, the electronic device may determine it is in the daytime. Therefore, the startup mode identifier is the third bit value, namely, the specified instance startup mode.

For example, the environment information includes the startup location. A specific application uses the specified instance startup mode in an office, and uses the multi-instance startup mode at home. In this case, the electronic device may obtain a startup location corresponding to the moment at which the open command is received. For example, if it is identified, by using a positioning mode, that a current bit value is within a bit value range in which the office is located, the startup mode may be set to the specified instance startup mode.

Certainly, the environment information may include a combination of two or more of the foregoing items. Similar to a matching process of single environment information, a specific matching identification manner in the combination case may be determining an environment information range within which the collected environment information falls, to determine a startup mode identifier corresponding to the environment information.

In this embodiment of this application, corresponding use environment ranges are configured for the different startup mode identifiers, to determine the corresponding startup mode identifier based on the environment information, so that the component instances in the target application can be run in different startup modes based on different use scenarios. This improves management flexibility of the component instances.

S603: Configure a corresponding first task view for the component instance based on the task identifier.

In this embodiment, before configuring a task view of a component instance in the target application, the electronic device needs to determine a task identifier corresponding to the component instance, and configure one task view, namely, the first task view, for the component instance based on the task identifier. It should be noted that different task views are configured for different component instances. For example, when two component instances run in the target application, and different task identifiers are respectively configured for the two component instances, the electronic device configures two first task views for the two component instances respectively, and each first task view is used to operate one component instance. In comparison with the single-instance startup mode, in the case of starting a plurality of instances, different component instances correspond to different first task views, that is, component instances corresponding to different task identifiers are independent of each other. Therefore, in the case of switching different component instances, the user can operate a corresponding component instance by switching to a first task view corresponding to the component instance, with no need to close other component instances.

In another example, when the user repeatedly starts a same component instance, because the component instance is the same, a same task identifier is allocated. When the electronic device identifies that the task identifier corresponding to the component instance that is started a plurality of times is the same, the electronic device reuses a same task view, and does not configure one new task view for the component instance. In comparison with the multi-instance startup mode, in the case of starting a same component instance, because the task identifier corresponding to the same component instance is the same, a new first task view is not repeatedly configured for the component instance, but the component instance with the same task identifier reuses a same first task view. This avoids unnecessary resource consumption and improves resource utilization of the electronic device.

It can be seen that, the first task view is configured for the component instance based on the task identifier, so that a task view can be configured for the same component instance in a manner similar to the "single-instance startup mode", and task views can be configured for the different component instances in a manner similar to the "multi-instance startup mode". In this way, advantages of the multi-instance startup mode and the single-instance startup mode are retained, and the problems of the two startup modes is resolved, improving accuracy of component instance management.

Further, in another embodiment of this application, FIG. 9 is a specific implementation flowchart of S603 in an instance management method according to an embodiment of this application. Refer to FIG. 9. S603 in this embodiment of this application specifically includes S6031 and S6032. Specific descriptions are as follows:

S6031: Generate, by using a general component in the target application, the component instance and a component record corresponding to the component instance, where the component record includes the task identifier.

In this embodiment, when running a corresponding component instance in the target application, the electronic device needs to use a general component associated with the target application as a container of the component instance, to generate an operable component instance. A component record corresponding to the component instance is simultaneously generated in a component management service of the electronic device side. The component record is a minimum unit for managing each application in the application, and each component record corresponds to one component instance in the application side. Before configuring a component instance, the electronic device side determines a task identifier corresponding to the component instance. In some implementations, the task identifier corresponding to the component instance may be a key of the component instance. Certainly, in some component instances, the task identifier may alternatively be an instance name or a storage address of the component instance. When creating a component record, the electronic device may add the task identifier to the component record, so that when the same component instance is subsequently repeatedly started, whether a new first task view needs to be configured may be determined by querying the task identifier in the component record.

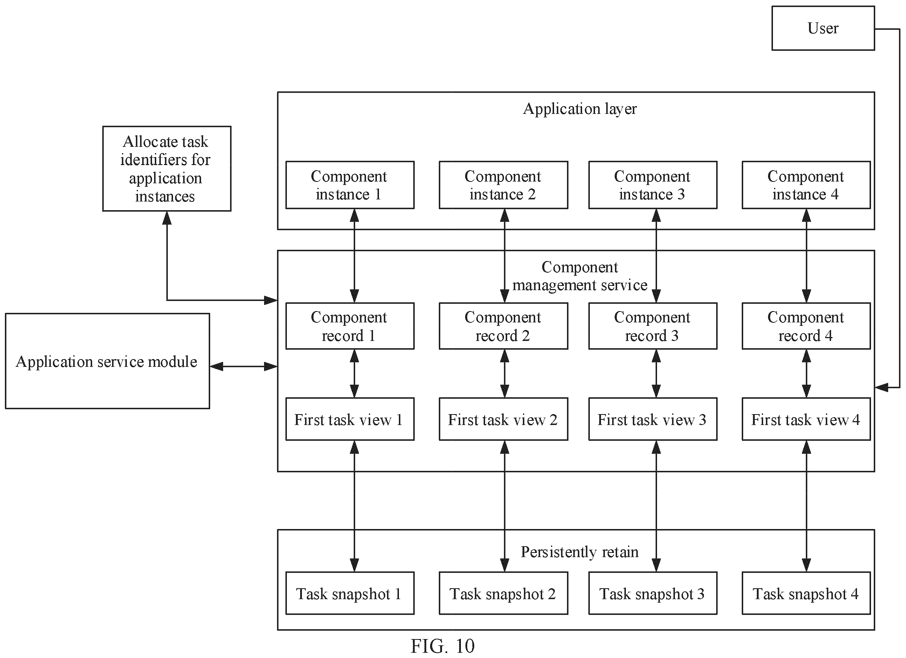

For example, FIG. 10 is a diagram of managing a first task view according to an embodiment of this application. Refer to FIG. 10. Each component instance running on the application side corresponds to one component instance, for example, a component instance 1 or a component instance 2, and a corresponding component record is created for each component instance in the component management service of the electronic device side. For example, a component record corresponding to the component instance 1 is a component record 1, and a component record corresponding to the component instance 2 is a component record 2.

S6032: Configure the corresponding first task view for the component instance, and establish a second association relationship between the first task view and the component record.

In this embodiment, after creating the component record corresponding to the component instance, the electronic device needs to configure a corresponding first task view, that is, visualize the component instance, so that the user can operate the component instance by using the first task view. In addition, to reuse a same first task view for a same task record, the electronic device needs to establish an association relationship between the first task view and the component record that carries the task identifier, namely, the foregoing second association relationship.

Still refer to the example in FIG. 10. After establishing the component instance and the component record, the electronic device needs to configure the corresponding first task view for displaying the component instance. The task view is a minimum unit for managing tasks in the electronic device side. One first task view includes only one component instance, that is, one component instance corresponds to one first task view. A plurality of component instances in one application can be displayed on a view management interface. To help the user determine, in the view management interface, a component instance to be operated, one task snapshot is generated for each first task view. The user may quickly determine, by viewing a corresponding task snapshot in the view management interface, the component instance to be operated. For example, a first task view corresponding to the component instance 1 is a first task view 1, and a corresponding task snapshot is a task snapshot 1; and a first task view corresponding to the component instance 2 is a first task view 2, and a corresponding task snapshot is a task snapshot 2. It should be noted that the task snapshot is a persistently retained view, that is, a component instance and an application that correspond to the task snapshot do not run in the background, but the task snapshot is retained in the task management view. The user may tap any task snapshot in the task management view to restart the corresponding component instance and the application.

In this embodiment of this application, in a process of running the component instance in the target application in the electronic device, the application side only needs to manage the component instance, and configuration and maintenance of the first task view are completed by the component management service of the electronic device side. It should be noted that the application service module is configured on the electronic device side, and the application service module is specifically configured to: read startup configuration information from the package of the application, and configure, based on the startup configuration information, the corresponding task identifier for the component instance running in the application, to configure the first task view based on the task identifier. It can be learned that, the application only needs to undertake a task of creating a component instance, and does not need to independently develop additional specified instance startup mode. This reduces development difficulty of the application. The specified instance startup mode is completed by using the electronic device side, that is, can be applied to all applications installed in the electronic device.

In another embodiment of this application, in the specified instance startup mode (that is, the startup mode identifier is the first bit value), the first task view is configured for the component instance in different manners based on whether the first task view corresponding to the task identifier has been configured. Specifically, there are the following two cases:

Case 1: A configured task view exists in the task identifier corresponding to the component instance. In this case, the electronic device reuses the first task view corresponding to the task identifier, that is, the component instance corresponding to the component instance is displayed in the first task view with a same task identifier. This avoids configuring a plurality of task views when a same component instance is repeatedly started. The configured first task view is used to display a component instance that is started in a running process of the application, the user may switch the component instance to the background when the user needs to operate another component instance or the application, and the corresponding first task view is not displayed in the foreground. Therefore, when the user needs to re-perform an operation on a component instance that is started, the electronic device may reuse a fourth task view that has a same task identifier as the component instance, and does not need to re-draw a view. This improves efficiency of starting the component instance.

Case 2: No configured task view exists in the task identifier corresponding to the component instance. In this case, a first task view corresponding to the task identifier is configured for the component instance. The configuration operation may be creating one new first task view for the component instance, or extracting a task view corresponding to the task identifier from a view library. In this case, no task view associated with the task identifier of the component instance exists in the configured task view, that is, the component instance is not repeatedly started. Therefore, in this case, the electronic device configures a first task view corresponding to the task identifier for the component instance, so that task views of different component instances are independent of each other when a plurality of instances run. This can implement an objective of performing an operation of quickly switching between the plurality of instances.

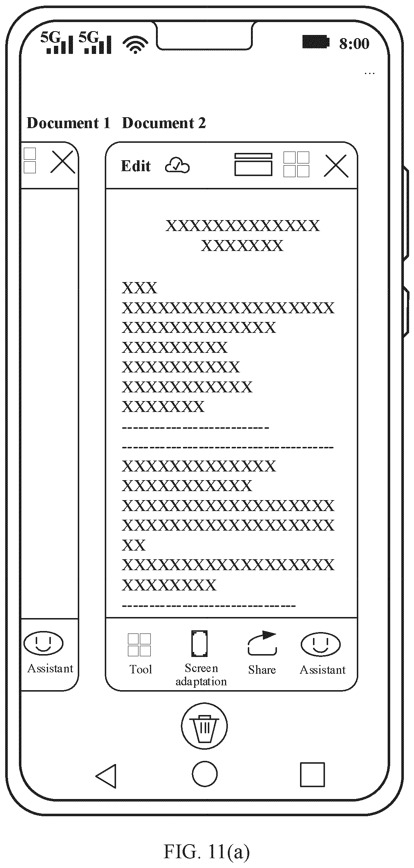

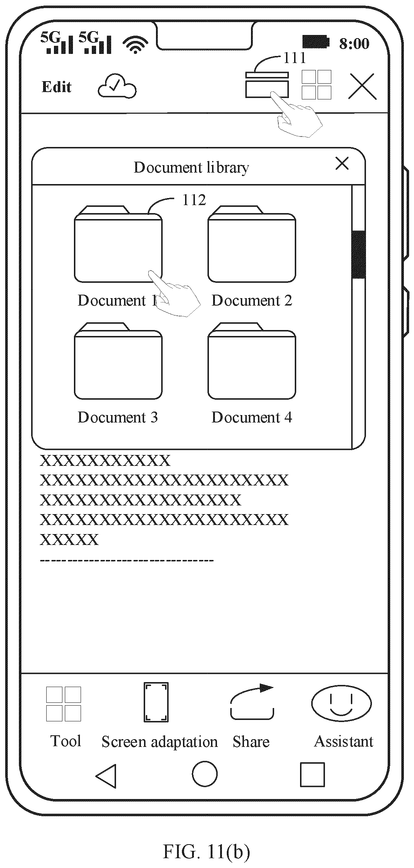

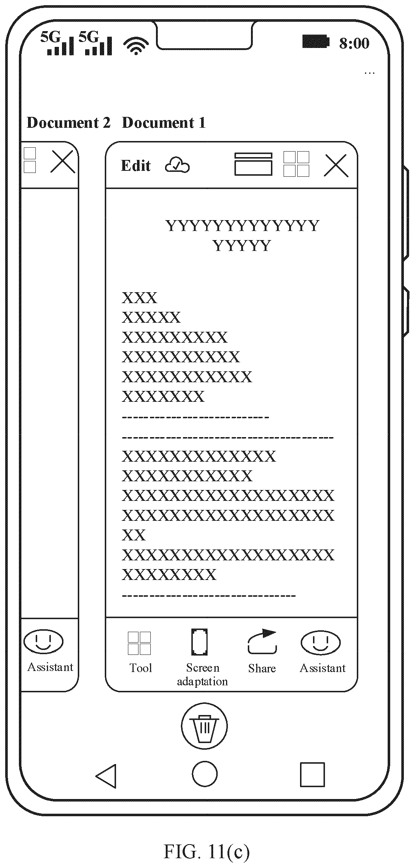

For example, FIG. 11(a) to FIG. 11(c) are diagrams of configuring a first task view according to an embodiment of this application. The target application is a document editing application. The user may open a plurality of documents in the document editing application, for example, a document 1 and a document 2. In this case, because the two documents correspond to different task identifiers, the electronic device configures a corresponding first task view for each of the two documents, and may view task views currently running in the electronic device by invoking the task management view, as shown in FIG. 11(a). In this case, when the user reopens the document 1 in a first task view of the document 2, as shown in FIG. 11(b), a corresponding document library in the electronic device is displayed by tapping an open control 111. The user may select, in the document library, a document to be opened, for example, select an icon 112 corresponding to the document 1. Because a task identifier of the document 1 that is opened this time is the same as a task identifier of document 1 that has been opened, the electronic device does not configure a new first task view for the document 1, that is, the document 1 that is opened this time and the document 1 that has been opened reuse the same fourth task view, namely, the configured first task view. In this case, task views running in the electronic device that are viewed by invoking the task management view are as shown in FIG. 11(c). A view currently running in a foreground is switched from a view of the document 2 to a view of the document 1, but a total quantity of task views does not change.

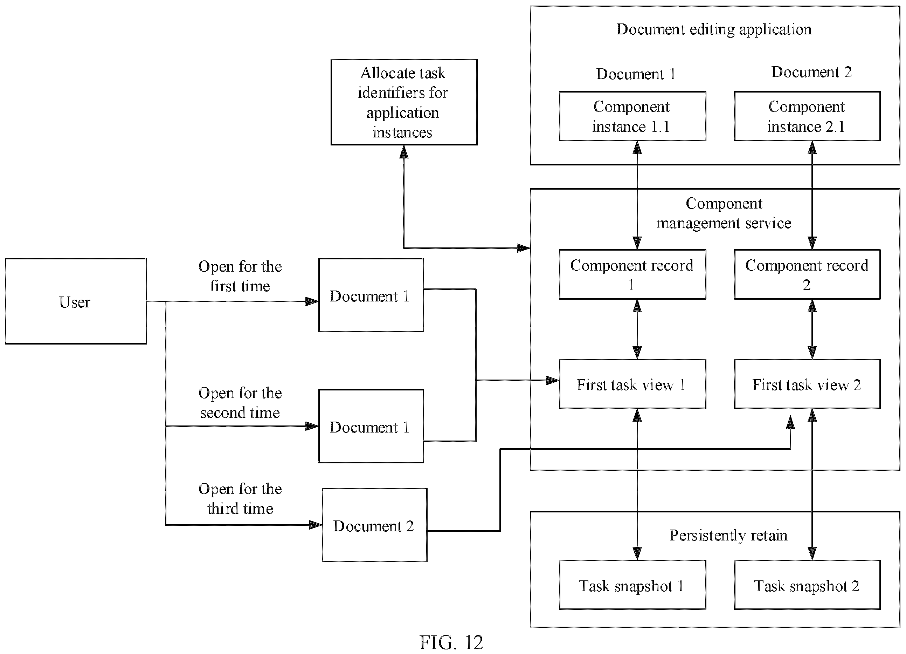

For example, FIG. 12 is a diagram of managing a task view according to an embodiment of this application. Refer to FIG. 12. The target application is specifically a document editing application. When the user repeatedly opens a same document 1, the electronic device does not configure a new first task view, but reuses the same first task view, namely, a first task view 1, and component records corresponding to the document opened twice are the same, namely, a component record 1. When the user opens another document, namely, a document 2, because task identifiers of the document 1 and the document 2 are different, the electronic device creates a new first task view, namely, a first task view 2, configures a corresponding component record, namely, a component record 2, and establishes an association relationship between the component record and the task view.

In a possible implementation, after the first task view corresponding to the component instance is configured, the method further includes: destroying, in response to a close command for the component instance in the target application, the component instance running in the target application; and retaining the first task view corresponding to the component instance, and storing a first association relationship between a task identifier of any component instance and the first task view.

It should be noted that, according to the instance management method provided in this embodiment of this application, when a same component instance is repeatedly opened, a configured first task view can be reused based on the following: When the application in the electronic device closes one component instance, although the application side destroys the component instance in the target application, a task view corresponding to the component instance is not destroyed, that is, the first task view related to the component instance is still retained. In addition, an association relationship (namely, the first association relationship) between the first task view and the task identifier is stored. In this case, a same first task view can be reused when it is subsequently detected that a component instance with a same task identifier runs, avoiding frequent configuration of the same task view.

In some possible implementations, when receiving the close command, the electronic device may destroy the component instance, and may further freeze the component instance running in the target application, that is, retain related data of the component instance, so that the frozen component instance can be reactivated when the component instance is subsequently reused.

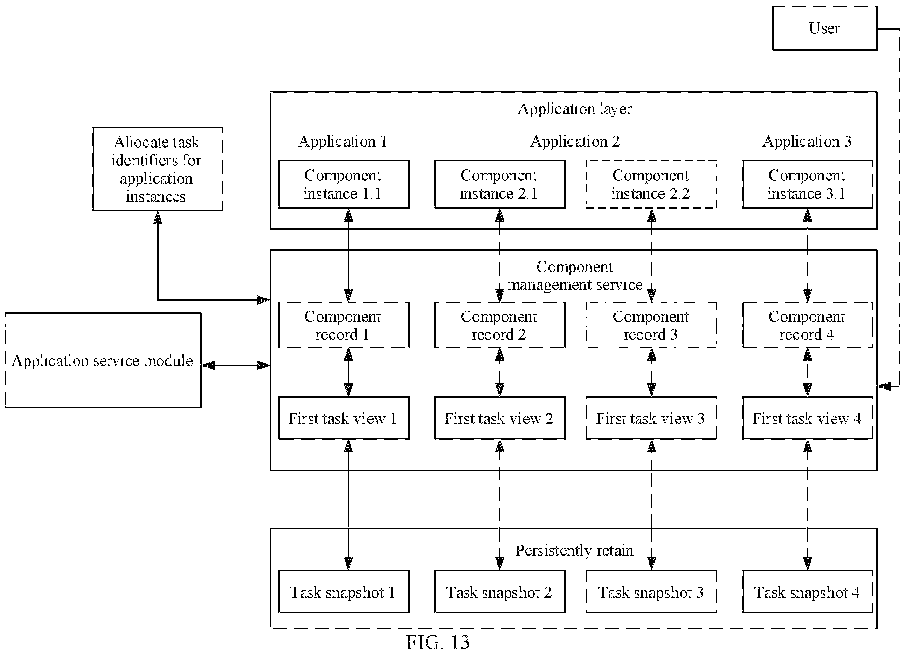

For example, FIG. 13 is a diagram of destroying a component instance according to an embodiment of this application. Refer to FIG. 13. The electronic device runs three different applications. A component instance running in an application 1 is created based on a component 1, for example, a component instance 1.1. A component instance running in an application 2 is created based on a component 2, for example, a component instance 2.1 and a component instance 2.2. Correspondingly, a component instance corresponding to an application 3 is a component instance 3.1. When the user closes a second component instance running in the application 2, namely, the component instance 2.2, the electronic device destroys the component instance 2.2 corresponding to the component instance. Correspondingly, a component record corresponding to the component instance 2.2, namely, the component record 3, may also be simultaneously destroyed. However, a first task view corresponding to the component instance, namely, a first task view 3, and a corresponding task snapshot are retained, so that the first task view and the task snapshot can be invoked when the component instance is subsequently restarted.

It can be learned from the foregoing that, according to the instance management method provided in this embodiment of this application, when the user opens the component in the target application, the startup configuration information corresponding to the target application is read, the task identifier is allocated, by using the startup configuration information corresponding to the target application, to the component instance running in the target application, and the corresponding first task view is configured for the component instance based on the task identifier, to perform the operation on the component instance running in the target application. This implements an objective that a task view can be flexibly configured in a same target application. Different from a conventional instance management technology in which only one task view is allocated to a component of a target application, a corresponding task identifier may be allocated to each component instance based on the startup configuration information, so that a task view is configured based on the task identifier, that is, component instances with different task identifiers in the target application may correspond to different task views. This facilitates the user to quickly switch views when starting a plurality of component instances in one application, to simultaneously operate a plurality of different component instances, avoiding frequent startup and closure of component instances in the target application. This improves efficiency of switching between the component instances, reduces waiting time during switching between instances for a user, and improves user experience.

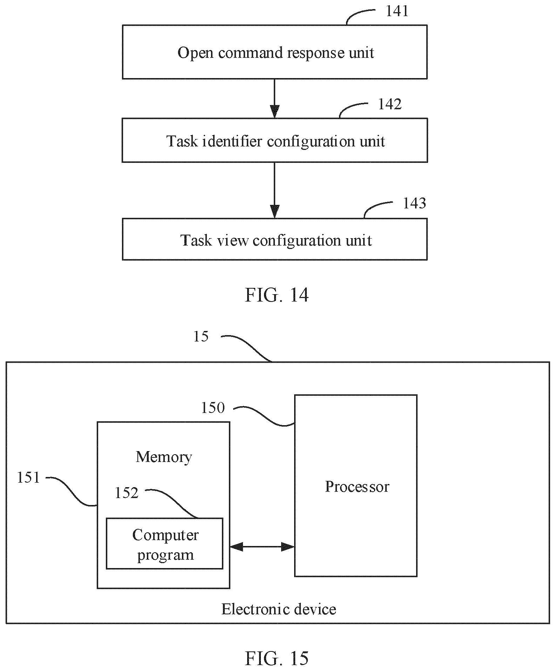

Corresponding to the instance management method in the foregoing embodiments, FIG. 14 is a block diagram of a structure of an example of an instance management apparatus according to an embodiment of this application. For ease of description, only a part related to the embodiment of this application is shown.

Refer to FIG. 14. The instance management apparatus includes:
an open command response unit 141, configured to receive an open command for a component running in a target application;
a task identifier configuration unit 142, configured to: create a component instance corresponding to the component, and configure a task identifier for the component instance based on startup configuration information of the target application; and
a task view configuration unit 143, configured to configure a corresponding first task view for the component instance based on the task identifier.

In some possible implementations, the startup configuration information includes a startup mode identifier; and the task identifier configuration unit 142 includes:
a first configuration unit, configured to: when the startup mode identifier is a first bit value, configure the task identifier for the component instance based on the startup configuration information.

In some possible implementations, the management apparatus further includes:
an environment information determining unit, configured to determine environment information obtained when the open command is received; and
a mode determining unit, configured to query, by using the startup configuration information, the startup mode identifier associated with the environment information.

In some possible implementations, the environment information includes one or a combination of at least two of the following: startup time, a startup location, and an application running on a device.

In some possible implementations, the task view configuration unit 143 includes:
a reuse configuration unit, configured to: when there is a first task view corresponding to the task identifier in a task view of the electronic device, reuse the first task view corresponding to the task identifier; and
a new configuration unit, configured to: when there is no first task view corresponding to the task identifier in a task view of the electronic device, configure, for the electronic device, a first task view corresponding to the task identifier for the component instance.

In some possible implementations, the management apparatus further includes:
a second configuration unit, configured to: when the startup mode identifier is a second bit value, display the component instance in a corresponding second task view in the target application, where the second task view is used to display all component instances in the target application; and/or
a third configuration unit, configured to: when the startup mode identifier is a third bit value, configure a corresponding third task view for the component instance, where each component instance opened by using the open command corresponds to one third task view.

In some possible implementations, the management apparatus further includes:
a component removal unit, configured to destroy, in response to a close command for the component instance in the target application, the component instance running in the target application; and
a view retention unit, configured to: retain the first task view corresponding to the component instance, and store a first association relationship between the task identifier of the component instance and the first task view.

In some possible implementations, the task view configuration unit 143 includes:
a component record creation unit, configured to generate, by using a general component in the target application, the component instance and a component record corresponding to the component instance, where the component record includes the task identifier; and
an association creation unit, configured to: configure the corresponding first task view for the component instance, and establish a second association relationship between the first task view and the component record.

Therefore, according to the instance management apparatus provided in this embodiment of this application, the following may also be implemented: When a user opens the component in the target application, the startup configuration information corresponding to the target application is read, the task identifier is allocated, by using the startup configuration information corresponding to the target application, to the component instance running in the target application, and the corresponding first task view is configured for the component instance based on the task identifier, to operate the component instance running in the target application. This implements an objective that a task view can be flexibly configured in a same target application. Different from a conventional instance management technology in which only one task view is allocated to a component of a target application, a corresponding task identifier may be allocated to each component instance based on the startup configuration information, so that a task view is configured based on the task identifier, that is, component instances with different task identifiers in the target application may correspond to different task views. This facilitates the user to quickly switch views when starting the plurality of component instances in one application, to simultaneously operate a plurality of different component instances, avoiding frequent startup and closure of component instances in the target application. This improves efficiency of switching between the component instances, reduces waiting time during switching between instances for a user, and improves user experience.

FIG. 15 is a diagram of a structure of an electronic device according to an embodiment of this application. As shown in FIG. 15, the electronic device 15 in this embodiment includes: at least one processor 150 (only one processor is shown in FIG. 15), a memory 151, and a computer program 152 that is stored in the memory 151 and that is executable on the at least one processor 150. When executing the computer program 152, the processor 150 implements the steps in any one of the foregoing instance management method embodiments.

The electronic device 15 may be a computing device, for example, a desktop computer, a notebook computer, a palmtop computer, or a cloud server. The electronic device may include but is not limited to the processor 150 and the memory 151. Persons skilled in the art may understand that FIG. 15 is merely an example of the electronic device 15, and does not constitute a limitation on the electronic device 15. The electronic device may include more or fewer components than those shown in the figure, or may combine some components, or may have different components. For example, the electronic device may further include an input/output device, a network access device, or the like.

The processor 150 may be a central processing unit (Central Processing Unit, CPU). The processor 150 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 151 may be an internal storage unit in the electronic device 15, for example, a hard disk or a memory in the electronic device 15. In some other embodiments, the memory 151 may alternatively be an external storage device in the electronic device 15, for example, a plug-connected hard disk, a smart media card (Smart Media Card, SMC), a secure digital (Secure Digital, SD) card, or a flash card (Flash Card) that is disposed on the electronic device 15. Further, the memory 151 may further include both an internal storage unit in the electronic device 15 and an external storage device. The memory 151 is configured to store an operating system, an application, a bootloader (BootLoader), data, another program, and the like, for example, program code of the computer program. The memory 151 may be further configured to temporarily store data that has been output or is to be output.

It should be noted that, content such as information exchange and execution processes between the foregoing apparatuses/units are based on a same concept as those in the method embodiments of this application. For specific functions and brought technical effects of the foregoing apparatuses/units, refer to the method embodiments. Details are not described herein again.

Persons skilled in the art may clearly understand that, for the purpose of convenient and brief description, division into the foregoing functional units and modules is merely used as an example for description. During actual application, the foregoing functions may be allocated to different functional units and modules for implementation as required. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program stored in the memory and executable on the at least one processor. When executing the computer program, the processor implements the steps in any one of the foregoing method embodiments.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable medium may include at least any entity or apparatus that can carry the computer program code to a photographing apparatus/electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, the description of each embodiment has respective focuses. For a part that is not described in detail or recorded in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In embodiments provided in this application, it should be understood that the disclosed apparatus/network device and method may be implemented in other manners. For example, the described apparatus/network device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. An instance management method, comprising:
receiving, by an electronic device, an open command for a component of a target application;
creating, by the electronic device, a component instance corresponding to the component, and configuring a task identifier for the component instance based on startup configuration information of the target application; and
configuring, by the electronic device, a corresponding first task view for the component instance based on the task identifier.

2. The management method according to claim 1, wherein the startup configuration information comprises a startup mode identifier; and the creating, by the electronic device, a component instance corresponding to the component, and configuring a task identifier for the component instance based on startup configuration information of the target application comprises:
when the startup mode identifier is a first bit value, configuring, by the electronic device, the task identifier for the component instance based on the startup configuration information.

3. The management method according to claim 2, wherein before the creating, by the electronic device, a component instance corresponding to the component, and configuring a task identifier for the component instance based on startup configuration information of the target application, the method further comprises:
determining, by the electronic device, environment information obtained when the open command is received; and
querying, by the electronic device by using the startup configuration information, the startup mode identifier associated with the environment information.

4. The management method according to claim 3, wherein the environment information comprises one or a combination of at least two of the following: startup time, a startup location, and an application running on a device.

5. The management method according to claim 2, wherein the configuring, by the electronic device, a corresponding first task view for the component instance based on the task identifier comprises:
when there is a first task view corresponding to the task identifier in a task view of the electronic device, reusing, by the electronic device, the first task view corresponding to the task identifier; or
when there is no first task view corresponding to the task identifier in a task view of the electronic device, configuring, by the electronic device, a first task view corresponding to the task identifier for the component instance.

6. The management method according to claim 2, wherein after the receiving, by an electronic device, an open command for a component of a target application, the method further comprises:
when the startup mode identifier is a second bit value, displaying, by the electronic device, the component instance in a corresponding second task view in the target application, wherein the second task view is used to display all component instances in the target application; or
when the startup mode identifier is a third bit value, configuring, by the electronic device, a corresponding third task view for the component instance, wherein each component instance opened by using the open command corresponds to one third task view.

7. The management method according to any one of claims 1 to 6, wherein after the configuring, by the electronic device, a corresponding first task view for the component instance based on the task identifier, the method further comprises:
destroying, by the electronic device in response to a close command for the component instance in the target application, the component instance running in the target application; and
retaining, by the electronic device, the first task view corresponding to the component instance, and storing a first association relationship between the task identifier of the component instance and the first task view.

8. The management method according to any one of claims 1 to 6, wherein the configuring, by the electronic device, a corresponding first task view for the component instance based on the task identifier comprises:
generating, by the electronic device by using a general component in the target application, the component instance and a component record corresponding to the component instance, wherein the component record comprises the task identifier; and
configuring, by the electronic device, the corresponding first task view for the component instance, and establishing a second association relationship between the first task view and the component record.

9. An instance management apparatus, comprising:
an open command response unit, configured to receive an open command for a component running in a target application;
a task identifier configuration unit, configured to: create a component instance corresponding to the component, and configure a task identifier for the component instance based on startup configuration information of the target application; and
a task view configuration unit, configured to configure a corresponding first task view for the component instance based on the task identifier.

10. An electronic device, wherein the electronic device comprises a memory, a processor, and a computer program stored in the memory and executable on the processor, and when the processor executes the computer program, the steps of the method according to any one of claims 1 to 8 are implemented.

11. A computer-readable storage medium, wherein the computer-readable storage medium stores a computer program, and when the computer program is executed by a processor, the steps in the method according to any one of claims 1 to 8 are implemented.
